# EUROPÄISCHE PATENTSCHRIFT

(11) **EP 1 649 256 B1**
(45) Veröffentlichungstag und Bekanntmachung des Hinweises auf die Patenterteilung: **20.01.2010**
(21) Anmeldenummer: 04762519.9
(22) Anmeldetag: 28.07.2004
(51) Int. Cl.: G01J 5/08

(54) **VORRICHTUNG ZUR BERUHRUNGSLOSEN TEMPERATURMESSUNG**
DEVICE FOR NON-CONTACT TEMPERATURE MEASUREMENT
DISPOSITIF DE MESURE DE TEMPERATURE SANS CONTACT

(30) Priorität: 30.07.2003 DE 10335206; 17.09.2003 DE 10343258
(43) Veröffentlichungstag der Anmeldung: 26.04.2006
(73) Patentinhaber: Optris GmbH, 13127 Berlin (DE)
(72) Erfinder: KIENITZ, Ulrich, 16352 Basdorf (DE)
(74) Vertreter: Naumann, Ulrich
(86) Internationale Anmeldenummer: PCT/DE2004/001672
(87) Internationale Veröffentlichungsnummer: WO 2005/012859

(56) Entgegenhaltungen:
- EP-A- 0 644 408
- EP-A- 1 085 307
- EP-A- 1 176 407
- DE-A- 3 213 955
- DE-A- 4 440 843
- DE-A- 19 654 211
- DE-A- 19 654 276
- DE-C- 3 403 372
- DE-U- 29 807 075
- GB-A- 696 604
- GB-A- 2 380 791
- US-A- 5 352 039
- US-B1- 6 196 714
- PATENT ABSTRACTS OF JAPAN Bd. 0060, Nr. 84 (P-117), 22. Mai 1982 (1982-05-22) & JP 57 022521 A (HORIBA LTD), 5. Februar 1982 (1982-02-05)

## Beschreibung

Die Erfindung betrifft eine Vorrichtung zur berührungslosen Temperaturmessung, mit einem Detektor, auf den von einem Messfleck auf einem Messobjekt ausgehende elektromagnetische Strahlung mittels einer Abbildungsoptik abbildbar ist, und mit einer Visiereinrichtung zur Kennzeichnung der Position und/oder der Größe des Messflecks auf dem Messobjekt, wobei die Visiereinrichtung Lichtquellen zur Bereitstellung von Visierstrahlen aufweist und wobei zur Bereitstellung jedes Visierstrahls jeweils eine unabhängige Lichtquelle vorgesehen ist.

Vorrichtungen zur berührungslosen Temperaturmessung der in Rede stehenden Art sind seit vielen Jahren aus der Praxis bekannt und werden eingesetzt, um die Temperatur einer Oberfläche eines entfernten Objektes zu messen. Bei diesen Messungen macht man sich das physikalische Phänomen zunutze, dass alle Oberflächen mit einer Temperatur über dem absoluten Nullpunkt aufgrund von Molekularbewegungen elektromagnetische Wellen abstrahlen. Diese von einem Objekt ausgehende Wärmestrahlung liegt in ganz überwiegendem Maße im Infrarotbereich und kann über eine infrarotsensitive Abbildungsoptik auf einen oder mehrere Infrarot-Detektoren gelenkt werden. Dort wird die Strahlungsenergie in elektrische Signale umgewandelt, die dann auf Grundlage der Kalibrierung des Detektors in Temperaturwerte umgerechnet werden können. Die gemessenen Temperaturwerte können sodann auf einem Display angezeigt, als analoges Signal ausgegeben oder über einen digitalen Ausgang auf einem Computer-Terminal dargestellt werden.

Der Bereich des Objekts, dessen Strahlung vom Detektor erfasst wird, wird im Allgemeinen als (Strahlungs-)Messfleck des Temperaturmessgeräts bezeichnet. Im praktischen Gebrauch ist die Kenntnis des Orts und der Größe des Messflecks für die Genauigkeit und Zuverlässigkeit der Temperaturmessung von größter Wichtigkeit. Ort und Größe des Messflecks sind dabei vom Aufbau und Messstrahlengang des Detektors sowie von den speziellen Eigenschaften der Abbildungsoptik abhängig. Von der Ausgestaltung der Abbildungsoptik hängt auch der Verlauf der Abhängigkeit der Messfleckgröße von der Messentfernung ab.

Grundsätzlich kann zwischen einer Fernfokussierung und einer Nahfokussierung unterschieden werden. Bei der Fernfokussierung wird der Detektor ins Unendliche und bei der Nahfokussierung auf eine Fokusebene in einer endlichen Entfernung vom Detektor abgebildet. Für beide Systeme sind unterschiedliche Visiereinrichtungen zur Visualisierung des Messflecks bekannt. Dabei werden optische Markierungen im Zentrum des Messflecks zur Markierung der genauen Messfleckposition bzw. - zusätzlich oder alternativ - entlang des äußeren Umfangs des Messflecks zur Kennzeichnung der Messfleckgröße erzeugt.

Aus der DE 196 54 276 A1 ist eine Vorrichtung zur berührungslosen Temperaturmessung mit einer ins Endliche abbildenden Optik bekannt. Dort sind mehrere Visierstrahlen vorgesehen, die derart windschief zur optischen Achse und zueinander ausgerichtet sind, dass jeder Visierstrahl sowohl vor als auch nach einem Scharfpunktmessfleck zur Kennzeichnung der Größe des Messflecks verwendbar ist. Die Visierstrahlen werden von einer Lichtquelle und einer hinter der Lichtquelle angeordneten diffraktiven Optik, beispielsweise in Form eines Hologramms, erzeugt. Hierbei ist nachteilig, dass zur Erzeugung der Vielzahl von Visierstrahlen eine aufwendige diffraktive Optik notwendig ist. Der Wirkungsgrad derartiger diffraktiver Komponenten sowie deren Abbildungsqualität ist begrenzt.

Es ist auch bekannt, den Messfleck mit einer Markierung zu visualisieren, die als durchgehende Umrandungslinie des Messflecks wahrnehmbar ist. Eine kontinuierliche Umrandung wird beispielsweise dann wahrgenommen, wenn ein Laserstrahl mit einem schnell rotierenden Spiegel um den Messfleck geführt wird, wie dies beispielsweise in der US 5,368,392 offenbart ist. Aufgrund ihres Energieverbrauchs und einer erhöhten Störanfälligkeit sind bewegliche mechanische Bauteile im Rahmen der berührungslosen Temperaturmessung, insbesondere beim Einsatz in mobilen Infrarot-Temperaturmessgeräten, nachteilig.

Aus der DE 298 07 075 U1 ist ein Pyrometer zur berührungslosen Temperaturmessung bekannt, das mit einem einen Messfleck auf dem Messobjekt markierenden Pilotlicht versehen ist, wobei die Lichtquelle des Pilotlichts zusätzlich als Signalgeber für die Messdatenübertragung nutzbar vorgesehen ist.

Aus der US 6,196,714 B1 ist ein Infrarot-Thermometer mit optischer Zielvorrichtung bekannt, wobei das Zielsystem zwei konvergierende Lichtstrahlen umfasst. Das Thermometer kann kontaktlos oder kontaktbehaftet verwendet werden.

Aus der GB 2 380 791 A ist eine handgehaltene Vorrichtung zur Messung der Körpertemperatur bekannt, wobei durch zwei konvergierende Strahlen von zwei LEDs ein Messpunkt auf dem Körper in einer definierten Entfernung erzeugt wird.

Aus der JP 57022521 ist es bekannt, eine Strahlungsfläche bzw. eine bestrahlte Fläche mittels einer Vielzahl von sichtbaren Lichtstrahlen zu kennzeichnen.

Aus der EP 0 644 408 A1 ist eine Vorrichtung zur berührungslosen Temperaturmessung bekannt, umfassend eine Lichtquelle zur Erzeugung eines Visierstrahls, der mittels eines drehbaren Spiegels manipuliert wird.

Aus der GB 696 604 ist eine Vorrichtung zur berührungslosen Temperaturmessung mit einer Abbildungsoptik in Form eines Hohlspiegels bekannt. Der Hohlspiegel ist entlang der optischen Achse verschiebbar ausgeführt, wodurch sich eine kontinuierliche Veränderung des Fokus realisieren lässt.

Aus der DE 34 03 372 C1 ist ein Mehrkanal-Prozess-Spektrometer bekannt, bei dem durch Verstellen eines dispergierenden und reflektierenden Elements eine Verstimmung des auszuwertenden Spektralbereichs durchgeführt wird.

Aus der US 5,352,039 ist eine berührungslos arbeitende Vorrichtung zur Temperaturmessung bekannt, wobei die Vorrichtung eine Visiereinrichtung mit zwei unabhängigen Lichtquellen zur Bereitstellung von zwei Visierstrahlen zur Kennzeichnung der Position und der Größe des Messflecks auf dem Messobjekt umfasst. Die Abbildungsoptik umfasst einen Parabolspiegel und definiert einen Beobachtungszylinder, dessen Durchmesser mittels einstellbarer Blenden variiert werden kann. Zur Anpassung der Visiereinrichtung an veränderte Durchmesser des Beobachtungszylinders ist eine schwenkbare Lagerung der beiden Lichtquellen der Visiereinrichtung vorgesehen.

Aus der DE 32 13 955 A1 ist eine Laserstrahlvisiereinrichtung zur Kennzeichnung von Lage und Durchmesser des Messflecks für Strahlungsthermometer mit fokaler und afokaler Linsen- und Spiegeloptik bekannt.

Aus der EP 1 176 407 A1 ist eine Vorrichtung zur Infrarot-Temperaturmessung bekannt, wobei die zugehörige Visiereinrichtung eine Lichtquelle zur Erzeugung eines Visierstrahls umfasst, welcher mittels gestuft ausgeführter Toroid-Linsen manipuliert wird.

Aus der DE 196 54 211 A1 ist eine optische Anordnung im Strahlengang eines Mikroskops bekannt, wobei die Anordnung Lochblenden sowie eine Variooptik zur Variation des optischen wirksamen Lochblendendurchmessers umfasst.

Aus der DE 44 40 843 A1 ist eine Infrarotsonde bekannt, welche eine Abbildungsoptik mit einer Positiv- und einer Negativlinse umfasst, deren Lagen in Bezug auf den Detektor sowie in Bezug auf das Messobjekt veränderbar sind.

Aus der EP 1 085 307 A1 ist eine Visiereinrichtung für eine berührungslose Temperaturmessvorrichtung bekannt. Mittels einer vorschaltbaren Optik kann zwischen einer axialen punktförmigen Beleuchtung und einer den Umfang des Messflecks anzeigenden kreisförmigen Beleuchtung umgeschaltet werden.

Der vorliegenden Erfindung liegt nun die Aufgabe zugrunde, eine Vorrichtung zur berührungslosen Temperaturmessung der gattungsbildenden Art so auszugestalten und weiterzubilden, dass die Vorrichtung flexibel in unterschiedlichen Messsituationen ohne die Notwendigkeit aufwendiger Justagearbeiten einsetzbar ist.

Die erfindungsgemäße Vorrichtung zur berührungslosen Temperaturmessung löst die voranstehende Aufgabe durch die Merkmale des Patentanspruches 1. Danach ist die gattungsbildende Vorrichtung derart ausgestaltet und weitergebildet, dass der Abstand des Scharfpunktes des Messflecks vom Detektor reproduzierbar von einer Nahposition in eine Fernposition und umgekehrt änderbar ist und dass die Visiereinrichtung zwischen der Nahfokussierung und der Fernfokussierung entsprechend umschaltbar ist, wobei bestimmte Lichtquellen für die Nahfokussierung und andere Lichtquellen für die Fernfokussierung justiert sind.

Erfindungsgemäß ist erkannt worden, dass sich ein hinreichend flexibler Einsatz der Vorrichtung dadurch realisieren lässt, dass zwei konkrete Messsituationen, nämlich eine Nahfokussierung und eine Fernfokussierung, quasi voreingestellt werden, indem ein reproduzierbares Umschalten zwischen der Nahposition und der Fernposition ermöglicht wird. Durch den Einsatz unabhängiger Lichtquellen ist es zudem möglich, die Visiereinrichtung entsprechend umschaltbar auszuführen. Erfindungsgemäß ist dazu konkret vorgesehen, die Visiereinrichtung derart ausgestalten, dass einige der Lichtquellen für die Nahfokussierung und andere Lichtquellen für die Fernfokussierung justiert sind. Eine Bedienperson kann demzufolge, ohne die Lichtquellen der Visiereinrichtung in irgendeiner Art und Weise justieren zu müssen, flexibel zwischen den beiden voreingestellten Messsituationen wechseln. Dazu müssen lediglich die jeweiligen Lichtquellen für die Nah- bzw. Fernfokussierung ein- bzw. ausgeschaltet werden.

Als Lichtquellen können in vorteilhafter Weise Laser, insbesondere Laserdioden, Verwendung finden, welche als Massenprodukte kostengünstig erhältlich und einfach einsetzbar sind.

Eine Änderung des Abstandes des Messfleckscharfpunktes vom Detektor von einer Nahposition in eine Fernposition und umgekehrt könnte unter Beibehaltung der Abbildungsoptik in einfacher Weise dadurch geschehen, dass der Detektor entlang des optischen Kanals präzise und reproduzierbar verschiebbar ist. Eine derartige Ausgestaltung würde den praktischen Anforderungen Rechnung tragen, wonach es häufig erwünscht ist, mit demselben Temperaturmessgerät sowohl kleine Objekte in geringer Entfernung als auch größere Objekte in größerer Entfernung zu erfassen. Im Falle der Fernfokussierung - d.h. der Messfleckscharfpunkt befindet sich in der Fernposition - könnte der Detektor über die Abbildungsoptik beispielsweise ins Unendliche abgebildet werden, während für die Nahfokussierung - d.h. der Messfleckscharfpunkt befindet sich in der Nahposition - eine Entfernung des Messfleckscharfpunktes vom Messgerät von bspw. 10 cm vorgesehen sein könnte.

Alternativ zu einer Verschiebbarkeit bzw. Verlagerbarkeit des Detektors entlang des optischen Kanals kann eine Umschaltbarkeit zwischen einer Nahfokussierung und einer Fernfokussierung mittels einer speziellen Abbildungsoptik erreicht werden. Dabei umfasst die Abbildungsoptik zwei im optischen Kanal hintereinander angeordnete Linsen. Vorzugsweise sind beide Linsen identisch ausgeführt, wodurch sich die Herstellungskosten erheblich reduzieren lassen. Zur Umschaltung von einer Nahfokussierung in eine Fernfokusslerung kann eine Linse, vorzugsweise die dem Detektor zugewandte Linse, entlang des optischen Kanals verlagerbar, insbesondere verschiebbar, ausgeführt sein. Mit anderen Worten ist die Abbildungsoptik im Sinne eines Varioobjektivs ausgeführt, so dass über eine Brennweitenänderung der Abbildungsoptik der Ort des Detektors bezüglich des Brennpunktabstandes verändert wird. Um eine einfache und reproduzierbare Verlagerbarkeit der Linse zu gewährleisten kann beispielsweise ein im Sinne einer Federmimik ausgebildeter Schnapp- und/oder Rastmechanismus vorgesehen sein.

Damit sowohl in der Nahposition als auch in der Fernposition die mittels der Visiereinrichtung erzeugte Markierung die Position und die Größe des Messflecks auf dem Messobjekt korrekt angibt, könnten beispielsweise zwei der Visierstrahlen den Messfleck in der Nahposition kennzeichnen, während die übrigen Visierstrahlen zur Markierung des Messflecks in der Fernposition eingesetzt werden.

In konstruktiver Hinsicht könnte die Visiereinrichtung beispielsweise insgesamt acht Laser aufweisen, die kreisförmig um den optischen Kanal herum angeordnet sind. Die beiden Laser zur Nahfokussierung, d.h. zur Markierung der Nahposition des Messfleckscharfpunkts, könnten dabei windschief zur optischen Achse verlaufen und derart ausgerichtet sein, dass die beiden Visierstrahlen den Detektorstrahlengang nachbilden und sich im Messfleckscharfpunkt auf der optischen Achse schneiden. Aufgrund der geringen, nahezu punktförmigen Ausdehnung des Messflecks in der Nahposition stimmt der sich ergebende Schnittpunkt der beiden Visierstrahlen in guter Näherung mit der tatsächlichen Messfleckgröße überein.

Die verbleibenden sechs Laser könnten nun allesamt zur Visualisierung des Messflecks in der Fernposition eingesetzt werden, indem sie nämlich parallel zum optischen Kanal des Detektors ausgerichtet werden. Für entfernte Objekte bilden die sechs Visierstrahlen aufgrund der kreisförmigen Anordnung der Laser um den optischen Kanal des Detektors einen auf dem Objekt sichtbaren Kreis aus sechs Leuchtpunkten, der die Position und die Größe des Messflecks auf dem Messobjekt markiert.

Es sei angemerkt, dass der Messfleck in der Fernposition prinzipiell natürlich auch durch eine größere oder kleinere Anzahl von Lasern markiert werden könnte, so z.B. durch vier oder acht Laser. Beim Einsatz von vier Lasern ergibt sich jedoch nur ein ungenügender optischer Eindruck eines Kreises, während der Einsatz von acht Lasern die Messvorrichtung aufwendiger und teurer in der Herstellung macht, ohne dabei allerdings zu einer wesentlichen Verbesserung hinsichtlich der Deutlichkeit der Messfleckmarkierung beizutragen.

Im Hinblick auf eine einfache Bauweise könnten alle Laser äquidistant zueinander um den optischen Kanal herum angeordnet sein. Im Hinblick auf eine übersichtliche und klare Messfleckmarkierung ist es jedoch vorzuziehen, die sechs Laser zur Visualisierung des Messflecks in der Fernposition äquidistant zueinander um den optischen Kanal herum anzuordnen, so dass benachbarte Laser jeweils einen Winkel von 60° miteinander einschließen. Die beiden Laser zur Kennzeichnung des Messflecks der Nahposition könnten dann an beliebigen Stellen zwischen den Lasern zur Kennzeichnung des Messflecks in der Fernposition angeordnet sein, wobei sie in vorteilhafter Weise bezüglich des optischen Kanals einander gegenüberliegend positioniert sind.

Im Hinblick auf eine benutzerfreundliche Bedienbarkeit und zur weitestgehenden Vermeidung benutzerseitiger Fehlpstierungen könnte die Vorrichtung derart ausgestaltet sein, dass die Umschaltung der Visiereinrichtung in Abhängigkeit von der Detektorposition automatisch erfolgt. Befindet sich der Detektor- beispielsweise zur Messung der Temperatur eines kleinen Messflecks in geringer Entfernung - in der Stellung, die mit der Nahposition des Messfleckscharfpunktes korrespondiert, so könnten die sechs Laser zur Fernfokussierung automatisch inaktiv, d.h. ausgeschaltet sein. Diese würden automatisch aktiviert, d.h. eingeschaltet, sobald sich der Detektor in der anderen, d.h. mit der Fernposition des Messfleckscharfpunktes korrespondieren Stellung befindet.

In einer besonders komfortablen und bedienerfreundlichen Ausgestaltung könnten die Laser mittels einer Elektronik einzeln ansteuerbar sein. Im Konkreten könnten die Laser dann in Umfangsrichtung des optischen Kanals jeweils mit geringer zeitlicher Verzögerung nacheinander angesteuert werden. Durch eine derartige Rotation entstünde der Eindruck einer sich drehenden Kreisanordnung. Der hervorgerufene optische Eindruck wäre entsprechend der eingestellten Verzögerungszeiten zwischen der Ansteuerung benachbarter Laser beliebig veränderbar.

Von ganz besonderem Vorteil ist es in diesem Zusammenhang, die Frequenz der Laseransteuerung proportional zur gemessenen Temperatur zu wählen. Beispielsweise könnte die Rotation umso schneller erfolgen, je höher die gemessene Temperatur ist. Eine andere Möglichkeit der Visualisierung des Messergebnisses besteht darin, die Farbe der Visierstrahlen in Abhängigkeit von der gemessenen Temperatur zu verändern. Dies könnte beispielsweise durch Mischung von grünem bzw. rotem Laserlicht erreicht werden, wobei die Verwendung von zusätzlichen andersfarbigen Lasern ebenso denkbar wäre. So könnte beim Überschreiten einer vorgebbaren Schwellenternperatur ein automatisches Umschalten von bspw. roten Lasern auf grüne Laser vorgesehen sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Seitenansicht eine erfindungsgemäße Vorrichtung zur berührungslosen Temperaturmessung,
- Fig. 2: in schematischer Darstellung die Vorrichtung aus Fig. 1 in einer Ansicht entlang des optischen Kanals,
- Fig. 3: in einer perspektivischen Ansicht ein Ausführungsbeispiel einer erfindungsgemäßen Vorrichtung zur berührungslosen Temperaturmessung in der Nahfokussierung und
- Fig. 4: in einer perspektivischen Ansicht die Vorrichtung aus Fig. 3 in einer Fernfokussierung.

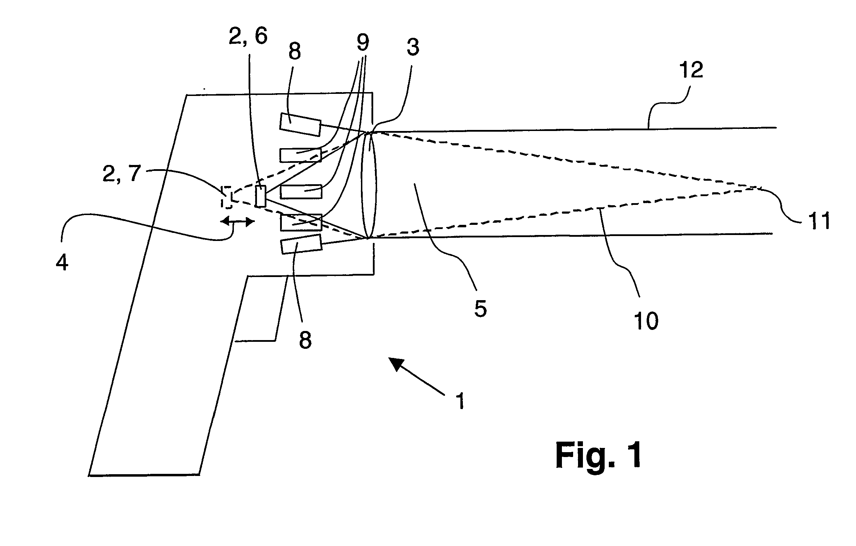

Fig. 1 zeigt in schematischer Seitenansicht eine prinzipielle Darstellung einer erfindungsgemäßen Vorrichtung zur berührungslosen Temperaturmessung in Form eines Hand-Messgeräts 1. Das Messgerät 1 umfasst dabei einen IR-Detektor 2, auf dem von einem Objekt (nicht dargestellt) ausgehende Wärmestrahlung mittels eines optischen Systems abbildbar ist. In dem Ausführungsbeispiel gemäß Fig. 1 ist das optische System als einfache Sammellinse 3 ausgeführt, welche die Wärmestrahlung auf den Detektor 2 fokussiert.

Wie durch den Doppelpfeil 4 angedeutet, ist der Detektor 2 entlang der Achse eines IR-optischen Kanals 5 präzise und reproduzierbar zwischen zwei Positionen verschiebbar. Im Konkreten handelt es sich dabei zum Einen um die mit durchgezogenen Linien gekennzeichnete Position 6, die mit der Fernposition des Messfleckscharfpunktes korrespondiert. Dabei ist der Detektor 2 im Brennpunkt der Sammellinse 3 angeordnet und wird durch die Sammellinse 3 folglich ins Unendliche abgebildet. Die zweite, gestrichelt gezeichnete Position 7 korrespondiert mit der Nahposition des Messfleckscharfpunktes. Befindet sich der Detektor 2 in dieser Stellung, so kommt der Messfleckscharfpunkt in endliche Entfernung von dem Messgerät 1 zu liegen. Im praktischen Gebrauch erlaubt das Messgerät 1 somit einerseits beispielsweise 2 mm große Objekte in 10 cm Entfernung zu messen (Nahfokussierung) und andererseits beispielsweise 5 m entfernte Objekte mit einem Durchmesser von 10 cm zu erfassen (Fernfokussierung).

Um den optischen Kanal 5 herum sind insgesamt acht Laserdioden 8, 9 kreisförmig angeordnet, wobei nur die obere und die untere Laserdiode 8 sowie die drei auf dem - bezüglich der Seitenansicht von Fig. 1 - vorderen Halbkreis angeordneten Laserdioden 9 zu erkennen sind. Die obere und die untere Laserdiode 8 sind windschief zur Achse des optischen Kanals 5 angeordnet und werden für die Nahfokussierung eingesetzt. Dazu sind die beiden Laserdioden 8 derart ausgerichtet, dass sie den Detektorstrahlengang 10 nachbilden, der sich ergibt, wenn der Detektor 2 in die Position 7 für die Nahfokussierung verschoben ist. Die Visierstrahlen der beiden Laserdioden 8 schneiden sich dann im Messfleck 11. Für einen Benutzer bedeutet dies, dass er die Entfernung des Messgeräts 1 vom Messobjekt solange verändern muss, bis die beiden Visierstrahlen auf dem Messobjekt deckungsgleich erscheinen.

Möchte der Benutzer weiter entfernte Objekte erfassen, so kann das Messgerät 1 umgeschaltet werden, indem der Detektor 2 in die Position 6 für die Fernfokussierung verfahren wird. Sobald der Detektor 2 die Position 6 erreicht, wird auch die Visiereinrichtung umgeschaltet, indem die insgesamt sechs Laserdioden 9 automatisch aktiviert und die beiden Laserdioden 8 deaktiviert werden. Die Laserdioden 9 sind parallel zum optischen Kanal 5 ausgerichtet und derart auf die Abbildungsoptik abgestimmt, dass sie den Detektorstrahlengang 12 für die Fernfokussierung präzise nachbilden.

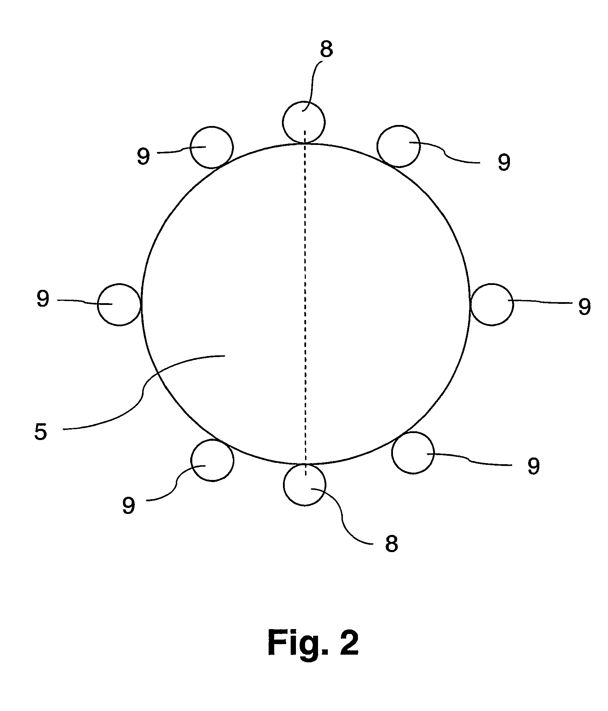

Aus Fig. 2, die das Messgerät 1 in einer schematischen Darstellung entlang des optischen Kanals 5 zeigt, wird die genaue Anordnung der Laserdioden 8, 9 ersichtlich. Die Laser 8, 9 sind kreisförmig um den optischen Kanal 5 angeordnet, wobei die beiden Laser 8 zur Visualisierung des Messflecks 11 in der Nahposition einander in Bezug auf den optischen Kanal 5 gegenüber liegen. Die übrigen sechs Laser 9 für die Fernfokussierung sind äquidistant zueinander angeordnet, wobei zwei benachbarte Laserdioden 9 einen Winkel von jeweils 60° miteinander einschließen. Auf diese Weise wird ein symmetrisches kreisförmiges Beleuchtungsmuster erzeugt, welches den äußeren Umfang des Messflecks auf dem Messobjekt markiert.

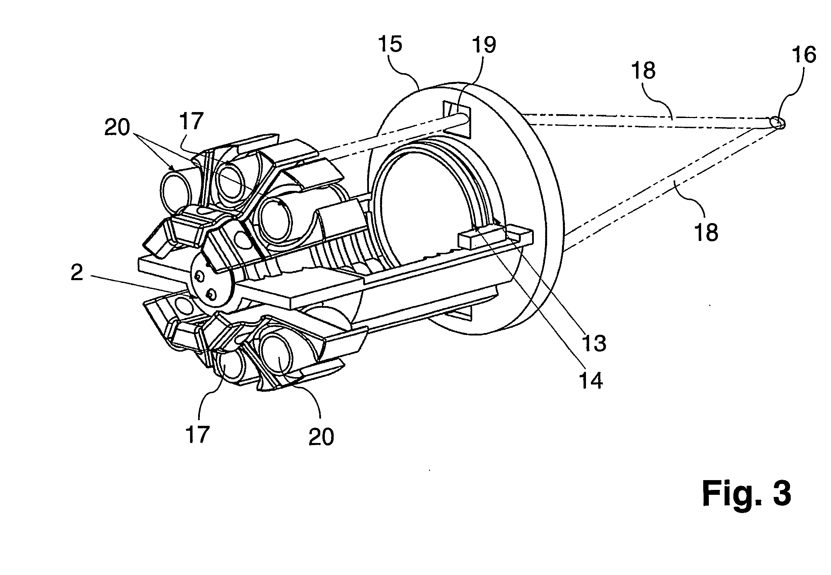

Fig. 3 zeigt - schematisch - in einer perspektivischen Ansicht ein Ausführungsbeispiel einer erfindungsgemäßen Vorrichtung mit einer zwei identisch ausgeführte Sammellinsen 13, 14 umfassenden Abbildungsoptik. Die dem IR-Detektor 2 abgewandte Linse 13 ist in einem festen Abstand zum IR-Detektor 2 in einem Fensterring 15 gehalten. Die dem IR-Detektor 2 zugewandte zweite Linse 14 kann entlang des IR-optischen Kanals 5 verschoben werden. In dem dargestellten Ausführungsbeispiel erfolgt die Verschiebung der Linse 14 reproduzierbar zwischen zwei unterschiedlichen Positionen. In Fig. 3 befindet sich die Linse 14 in einer Position, die mit der Nahfokussierung korrespondiert, d.h. der sich ergebende Fokuspunkt 16 weist einen geringen Abstand vom Detektor 2 auf.

Zur optischen Visualisierung des Fokuspunkts 16 sind zwei einander gegenüberliegende Lasermodule 17 aktiv, wobei die von den Lasermodulen 17 erzeugten Visierstrahlen 18 durch in den Fensterring 15 integrierte optische Elemente 19 auf den Fokuspunkt 16 fokussiert werden.

Die Verschiebung der Linse 14 entlang des optischen Kanals 5 erfolgt über eine Schnapp- und/oder Rastvorrichtung, die in Sinne einer Federmimik ausgebildet ist. Die Vorrichtung ist von außen über einen Schieber betätigbar. Alternativ kann ein Gewinde vorgesehen sein, so dass sich die Linse 14 mittels einer Drehung entlang des optischen Kanals 5 verschieben lässt.

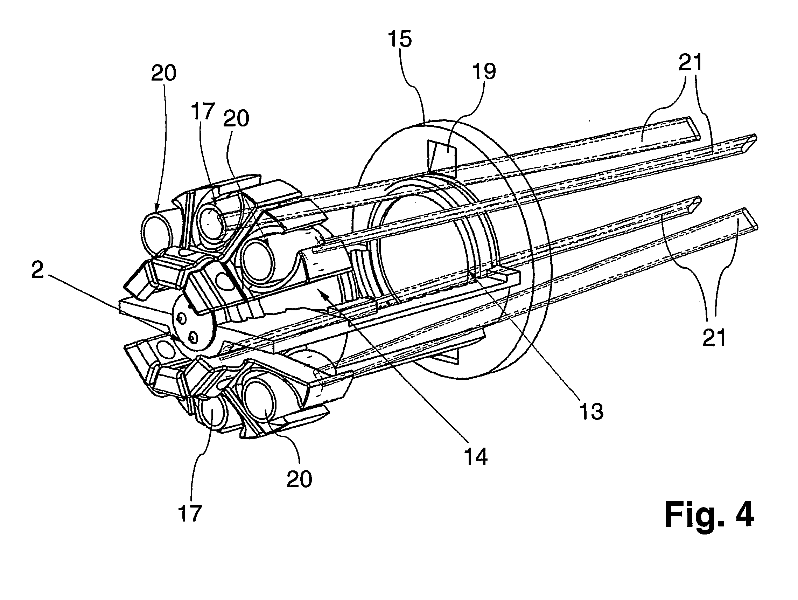

In Fig. 4 ist die gleiche Vorrichtung wie in Fig. 3 dargestellt, und gleiche Bezugszeichen bezeichnen gleiche Bauteile. Im Unterschied zur Darstellung in Fig. 3 befindet sich die Linse 14 in der mit einer Fernfokussierung korrespondierenden Position nahe dem IR-Detektor 2. Bei dieser Positionierung der Linse 14 sind die Lasermodule 17 deaktiviert. Stattdessen sind die vier Lasermodule 20 aktiviert, von denen aufgrund der perspektivischen Darstellung lediglich drei zu erkennen sind. Die Ausrichtung der Lasermodule 20 ist derart auf die Abbildungsoptik abgestimmt, dass die erzeugten Visierstrahlen 21 dem Detektorstrahlengang für die Fernfokussierung entsprechen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

## Patentansprüche

1. Vorrichtung zur berührungslosen Temperaturmessung, mit einem Detektor (2), auf den von einem Messfleck auf einem Messobjekt ausgehende elektromagnetische Strahlung mittels einer Abbildungsoptik abbildbar ist, und mit einer Visiereinrichtung zur Kennzeichnung der Position und/oder der Größe des Messflecks auf dem Messobjekt, wobei die Visiereinrichtung Lichtquellen zur Bereitstellung von Visierstrahlen aufweist und wobei zur Bereitstellung jedes Visierstrahls jeweils eine unabhängige Lichtquelle vorgesehen ist,
**dadurch gekennzeichnet, dass** der Abstand des Scharfpunktes des Messflecks vom Detektor (2) reproduzierbar von einer Nahposition in eine Fernposition und umgekehrt änderbar ist und dass die Visiereinrichtung zwischen der Nahfokussierung und der Fernfokussierung entsprechend umschaltbar ist, wobei bestimmte Lichtquellen für die Nahfokussierung und andere Lichtquellen für die Fernfokussierung justiert sind.

2. Vorrichtung nach Anspruch 1, **dadurch gekennzeichnet, dass** als Lichtquellen Laser (8, 9), insbesondere Laserdioden, vorgesehen sind.

3. Vorrichtung nach Anspruch 1 oder 2, **dadurch gekennzeichnet, dass** der Detektor (2) einen optischen Kanal (5) definiert, wobei der Detektor (2) entlang des optischen Kanals (5) verschiebbar ist.

4. Vorrichtung nach einem der Ansprüche 1 bis 3, **dadurch gekennzeichnet, dass** die Abbildungsoptik zwei, vorzugsweise identische, Linsen (13, 14) umfasst, wobei eine der Linsen (13, 14), vorzugsweise die dem Detektor (2) zugewandte Linse (14), entlang des optischen Kanals (5) verlagerbar, vorzugsweise verschiebbar, ausgeführt sein kann, wobei die Verlagerbarkeit der Linse (14) vorzugsweise durch einen Schnapp- und/oder Rastmechanismus realisiert ist.

5. Vorrichtung nach einem der Ansprüche 1 bis 4, **dadurch gekennzeichnet, dass** zwei der Visierstrahlen zur Visualisierung des Messflecks in der Nahposition und die übrigen Visierstrahlen zur Visualisierung des Messflecks in der Fernposition vorgesehen sind.

6. Vorrichtung nach einem der Ansprüche 2 bis 5, **dadurch gekennzeichnet, dass** die Visiereinrichtung insgesamt acht Laser (8, 9) aufweist.

7. Vorrichtung nach einem der Ansprüche 2 bis 6, **dadurch gekennzeichnet, dass** die Laser (8, 9) kreisförmig um den optischen Kanal (5) herum angeordnet sind und/oder dass die Laser (8, 9) äquidistant zueinander um den optischen Kanal (5) herum angeordnet sind.

8. Vorrichtung nach einem der Ansprüche 5 bis 7, **dadurch gekennzeichnet, dass** die Laser (9) zur Visualisierung des Messflecks in der Fernposition äquidistant zueinander um den optischen Kanal (5) herum angeordnet sind.

9. Vorrichtung nach einem der Ansprüche 5 bis 8, **dadurch gekennzeichnet, dass** die beiden Laser (8) zur Visualisierung des Messflecks in der Nahposition derart ausgerichtet sind, dass sich die Visierstrahlen schneiden,

10. Vorrichtung nach einem der Ansprüche 5 bis 9, **dadurch gekennzeichnet, dass** die beiden Laser (8) zur Visualisierung des Messflecks in der Nahposition bezüglich des optischen Kanals (5) einander gegenüberliegen.

11. Vorrichtung nach Anspruch 5 bis 10, **dadurch gekennzeichnet, dass** die Laser (9) zur Visualisierung des Messflecks in der Fernposition parallel zu dem optischen Kanal (5) ausgerichtet sind.

12. Vorrichtung nach einem der Ansprüche 5 bis 11, **dadurch gekennzeichnet, dass** die Umschaltung der Visiereinrichtung entsprechend der Detektorposition automatisch erfolgt.

13. Vorrichtung nach einem der Ansprüche 2 bis 12, **dadurch gekennzeichnet, dass** die Laser (8, 9) mittels einer Elektronik einzeln ansteuerbar sind.

14. Vorrichtung nach einem der Ansprüche 5 bis 13, **dadurch gekennzeichnet, dass** die Laser (9) zur Visualisierung des Messflecks in der Fernposition zur Erzeugung einer Rotationswirkung in Richtung des Umfangs des optischen Kanals (5) nacheinander ansteuerbar sind, wobei die Frequenz der Laseransteuerung vorzugsweise proportional zur Temperatur des Messflecks auf dem Messobjekt ist.

15. Vorrichtung nach einem der Ansprüche 1 bis 14, **dadurch gekennzeichnet, dass** die Farbe der Visierstrahlen in Abhängigkeit von der Temperatur des Messflecks auf dem Messobjekt veränderbar ist.

## Claims

1. A device for non-contact temperature measurement, having a detector (2), onto which electromagnetic radiation emanating from a measuring spot on a test object can be projected by means of an optical imaging system, and having a sighting device for identifying the position and/or the size of the measuring spot on the test object, wherein the sighting device comprises light sources for generation of sighting beams, and wherein a respective independent light source is provided for generation of each sighting beam, **characterised in that** the distance of the focal point of the measuring spot from the detector (2) is alterable in a reproducible manner from a near position to a far position and vice versa and **in that** the sighting device is correspondingly switchable between short-range focusing and long-range focusing, wherein certain light sources are adjusted for short-range focusing and other light sources are adjusted for long-range focusing.

2. A device according to claim 1, **characterised in that** lasers (8, 9), in particular laser diodes, are provided as light sources.

3. A device according to claim 1 or 2, **characterised in that** the detector (2) defines an optical channel (5), wherein the detector (2) is slidable along the optical channel (5).

4. A device according to any one of claims 1 to 3, **characterised in that** the optical imaging system comprises two preferably identical lenses (13, 14), wherein one of the lenses (13, 14), preferably the lens (14) facing the detector (2), can be designed to be movable, preferably slidable, along the optical channel (5), wherein the displaceability of the lens (14) is achieved preferably by a snap-in and/or catch mechanism.

5. A device according to any one of claims 1 to 4, **characterised in that** two of the sighting beams are provided for visualisation of the measuring spot in the near position and the remaining sighting beams are provided for visualisation of the measuring spot in the far position.

6. A device according to any one of claims 2 to 5, **characterised in that** the sighting device comprises a total of eight lasers (8, 9).

7. A device according to any one of claims 2 to 6, **characterised in that** the lasers (8, 9) are arranged in a circle around the optical channel (5) and/or the lasers (8, 9) are arranged equidistant from one another around the optical channel (5).

8. A device according to any one of claims 5 to 7, **characterised in that** the lasers (9) for visualisation of the measuring spot in the far position are arranged equidistant from one another around the optical channel (5).

9. A device according to any one of claims 5 to 8, **characterised in that** the two lasers (8) for visualisation of the measuring spot in the near position are aligned in such a way that the sighting beams intersect.

10. A device according to any one of claims 5 to 9, **characterised in that** the two lasers (8) for visualisation of the measuring spot in the near position are disposed opposite one another with respect to the optical channel (5).

11. A device according to any one of claims 5 to 10, **characterised in that** the lasers (9) for visualisation of the measuring spot in the far position are aligned parallel to the optical channel (5).

12. A device according to any one of claims 5 to 11, **characterised in that** switching of the sighting device is effected automatically according to the detector position.

13. A device according to any one of claims 2 to 12, **characterised in that** the lasers (8, 9) are individually controllable by electronic means.

14. A device according to any one of claims 5 to 13, **characterised in that** the lasers (9) for visualisation of the measuring spot in the far position are controllable in succession to produce a rotation effect in the direction of the circumference of the optical channel (5), wherein the frequency of the laser control is preferably proportional to the temperature of the measuring spot on the test object.

15. A device according to any one of claims 1 to 14, **characterised in that** the colour of the sighting beams is alterable as a function of the temperature of the measuring spot on the test object.

## Revendications

1. Dispositif de mesure sans contact de la température avec un détecteur (2) sur lequel un rayonnement électromagnétique, provenant d'une aire de mesure sur un objet à mesurer, peut être figuré au moyen d'une optique de reproduction et avec un dispositif de visée pour repérer la position et/ou la taille de l'aire de mesure sur l'objet à mesurer, le dispositif de visée présentant des sources lumineuses pour fournir des rayons de visée et une source lumineuse indépendante étant chaque fois prévue pour la fourniture de chaque rayon de visée,
**caractérisé en ce que** l'écart du point focal de l'aire de mesure peut être modifié de façon reproductible par le détecteur (2) d'une position proche à une position éloignée et inversement et que le dispositif de visée peut être commuté de façon correspondante entre une focalisation proche et une focalisation éloignée, certaines sources de mesure étant ajustées pour la focalisation proche et d'autres pour la focalisation éloignée.

2. Dispositif selon la revendication 1, **caractérisé en ce que** des lasers (8, 9), notamment des diodes laser, sont prévus comme sources lumineuses.

3. Dispositif selon la revendication 1 ou 2, **caractérisé en ce que** le détecteur (2) définit un canal optique (5), le détecteur (2) pouvant coulisser le long du canal optique (5).

4. Dispositif selon l'une des revendications 1 à 3, **caractérisé en ce que** l'optique de reproduction comprend deux lentilles (13, 14), de préférence identiques, l'une des lentilles (13, 14), de préférence la lentille (14) tournée vers le détecteur (2) peut être réalisée de façon à se déplacer, de préférence à coulisser, le long du canal optique (5), la possibilité de déplacement de la lentille (14) étant réalisée de préférence au moyen d'un mécanisme à crochet et/ou à encliquetage.

5. Dispositif selon l'une des revendications 1 à 4, **caractérisé en ce que** deux des rayons de visée sont prévus pour visualiser l'aire de mesure en position proche et les autres rayons de visée sont prévus pour visualiser l'aire de mesure en position éloignée.

6. Dispositif selon l'une des revendications 2 à 5, **caractérisé en ce que** le dispositif de visée présente en tout huit lasers (8, 9).

7. Dispositif selon l'une des revendications 2 à 6, **caractérisé en ce que** les lasers (8, 9) sont disposés en cercle autour du canal optique (5) et/ou que les lasers (8, 9) sont disposés à intervalles les uns des autres tout autour du canal optique (5).

8. Dispositif selon l'une des revendications 5 à 7, **caractérisé en ce que** les lasers (9) sont disposés à égale distance les uns des autres tout autour du canal optique (5) pour visualiser l'aire de mesure dans la position éloignée.

9. Dispositif selon l'une des revendications 5 à 8, **caractérisé en ce que** les deux lasers pour visualiser l'aire de mesure dans la position proche sont disposés de telle sorte que les rayons de visée se coupent.

10. Dispositif selon l'une des revendications 5 à 9, **caractérisé en ce que** les deux lasers (8) pour visualiser l'aire de mesure dans la position proche sont situés l'un en face de l'autre par rapport au canal optique (5).

11. Dispositif selon l'une des revendications 5 à 10, **caractérisé en ce que** les lasers (9) pour visualiser l'aire de mesure dans la position éloignée sont disposés parallèlement au canal optique..

12. Dispositif selon l'une des revendications 5 à 11, **caractérisé en ce que** la commutation du dispositif de visée s'effectue automatiquement en fonction de la position du détecteur.

13. Dispositif selon l'une des revendications 2 à 12, **caractérisé en ce que** les lasers (8, 9) peuvent être commandés individuellement au moyen d'une électronique.

14. Dispositif selon l'une des revendications 5 à 13, **caractérisé en ce que** les lasers (9) pour visualiser l'aire de mesure dans la position éloignée sont commandés l'un après l'autre pour créer un effet de rotation dans la direction de la périphérie du canal optique (5), la fréquence de la commande du laser étant de préférence proportionnelle à la température de l'aire de mesure sur l'objet à mesurer.

15. Dispositif selon l'une des revendications 5 à 14, **caractérisé en ce que** la couleur des rayons de mesure est modifiable en fonction de la température de l'aire de mesure sur l'objet à mesurer.
